# EUROPÄISCHE PATENTSCHRIFT

(11) **EP 0 841 202 B1**
(45) Veröffentlichungstag und Bekanntmachung des Hinweises auf die Patenterteilung: **15.09.2004**
(21) Anmeldenummer: 97110238.9
(22) Anmeldetag: 23.06.1997
(51) Int. Cl.: B60H 1/00

(54) **Heiz- oder Klimaanlage**
Heating or air conditioning installation
Installation de chauffage ou de climatisation

(30) Priorität: 09.08.1996 DE 19632147
(43) Veröffentlichungstag der Anmeldung: 13.05.1998
(73) Patentinhaber: Behr GmbH & Co., 70469 Stuttgart (DE)
(72) Erfinder: Berndt, Ralf, 71254 Ditzingen (DE); Drobner, Hans-Jürgen, 71229 Leonberg (DE); Grömmer, Christian, 70190 Stuttgart (DE); Putz, Ingo, 70195 Stuttgart (DE); Schierlitz, Karl, 70376 Stuttgart (DE); Ullrich, Walter, 71695 Möglingen (DE)

(56) Entgegenhaltungen:
- DE-A- 4 343 367
- DE-A- 4 442 000
- US-A- 5 167 574
- US-A- 5 619 862

## Beschreibung

Die Erfindung betrifft eine Heiz- oder Klimaanlage, insbesondere für den Innenraum eines Kraftfahrzeugs, nach dem Oberbegriff des Patentanspruchs 1.

Es sind Heiz- oder Klimaanlagen bekannt, die zur Steuerung des Luftstroms schwenkbare Klappen aufweisen. Diese Klappen können als doppelarmige Hebel ausgebildet sein, die mit ihren beiden Hebelarmen entsprechend angeordnete Kanäle öffnen oder verschließen. Solch eine Steuerklappe ist derart angeordnet, daß zur Kühlung des Luftstroms die vom Verdampfer kommende Luft bei einer ersten Stellung der Steuerklappe unmittelbar in den Fahrzeuginnenraum oder zur Erwärmung der Luft die vom Verdampfer kommende Luft erst durch den Heizkörper und erst dann in den Fahrzeuginnenraum geleitet wird. Je nach Schwenkstellung der Steuerklappe sind auch Zwischenstellungen möglich.

Aus der **DE 44 42 000 A1** ist auch eine Heiz- oder Klimaanlage mit einem Gehäuse bekannt, innerhalb dessen drei sternförmig zueinander angeordnete Einbaurahmen mit einer Anzahl von in einer Reihe angeordneten Lamellen angeordnet sind. Der durch den Verdampfer geleitete Luftstrom teilt sich in Abhängigkeit von der Stellung der Lamellen in einen Kaltluftstrom, der von dem Verdampfer durch einen Kaltluftkanal direkt zu dem Auslaß geführt wird, und in einen Warmluftstrom auf, der durch einen sich vom Verdampfer über den Heizkörper zum Auslaß erstreckenden Warmluftkanal geführt wird. Innerhalb des Warmluftkanals befinden sich zwei Einbaurahmen, und zwar ein Einbaurahmen in Strömungsrichtung vor und ein Einbaurahmen in Strömungsrichtung nach dem Heizkörper. Ein dritter Einbaurahmen befindet sich innerhalb des Kaltluftkanals. Zur Steuerung der Kaltluftmenge einerseits und der Warmluftmenge andererseits werden die Lamellen der entsprechenden Einbaurahmen durch eine Stangen- bzw. Hebelkinematik in die unterschiedlichen Arbeitsstellungen verschwenkt.

Es ist daher Aufgabe der Erfindung, eine Heiz- oder Klimaanlage derart auszubilden, daß der Aufwand zur Ansteuerung der Steuerelemente verringert wird.

Zur Lösung der Aufgabe weist die Erfindung die Merkmale des Patentanspruchs 1 auf.

Vorteilhaft wird durch die Erfindung der Steuerungsaufwand dadurch vermindert, daß mindestens ein Steuerelement selbsttätig in eine Schließstellung verstellt werden kann. Der Erfindung liegt der Gedanke zugrunde, daß das Steuerelement lediglich schwenkbar gelagert ist, so daß es bei Vorliegen eines Luftstroms in einer ersten Richtung selbsttätig öffnet und in einer zweiten entgegengesetzten Luftstromrichtung schließt.

Nach einer Ausgestaltung der Erfindung kann das Steuerelement als einzelne Rückschlagklappe ausgebildet sein, der ein Anschlag zugeordnet ist zur Festlegung der Rückschlagklappe in der Schließstellung.

Nach einem weiteren Ausführungsbeispiel des Steuerelements können mehrere nebeneinander angeordnete Rückschlagklappen angeordnet sein, wobei eine erste Rückschlagklappe den Anschlag bildet für eine zweite benachbarte Rückschlagklappe.

Die Steuerelemente können als doppelflügelige Rückschlagklappe mit einem kurzen und mit einem langen Flügel ausgebildet sein. Darüberhinaus kann das Steuerlement auch aus einem einzigen Flügel bestehen, der eben oder gewölbt ausgebildet sein kann.

Nach einem weiteren Ausführungsbeispiel können die Steuerelemente innerhalb von sternförmig zueinander angeordneten Einbaurahmen angeordnet sein. Jedem Einbaurahmen kann entweder eine doppelflügelige Rückschlagklappe oder eine Anzahl von in einer Reihe angeordneten Rückschlaglamellen zugeordnet sein. Vorteilhafterweise ist dann der stromaufwärts vom Heizkörper angeordnete Einbaurahmen mit einer Rückschlagklappe bzw. Rückschlaglamellen versehen, während die beiden anderen Einbaurahmen Rückschlagklappen bzw. -lamellen aufweisen, die durch eine Hebelkinematik nach einem vorgegebenen Prinzip in eine Schließstellung bzw. Öffnungsstellung verstellbar sind.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- **Fig. 1**: Einen Querschnitt durch eine doppelflügelige Rückschlagklappe,
- **Fig. 2**: einen Querschnitt durch eine einflügelige Rückschlagklappe,
- **Fig. 3**: einen Querschnitt durch eine gewölbt ausgebildete einflügelige Rückschlagklappe,
- **Fig. 4**: ein schematischer Längsschnitt durch eine Ausführungsform einer Heiz- oder Klimaanlage mit drei sternförmig angeordneten Einbaurahmen, denen jeweils eine Rückschlagklappe zugeordnet ist,
- **Fig. 5**: ein schematischer Längsschnitt durch eine zweite Ausführungsform einer Heiz- oder Klimaanlage nach Fig. 4, wobei den Einbaurahmen jeweils eine Anzahl von Rückschlaglamellen zugeordnet sind und
- **Fig. 6**: eine Seitenansicht eines mit der Hebelkinematik versehenen Einbaurahmens in geöffneter Stellung der Lamellen.

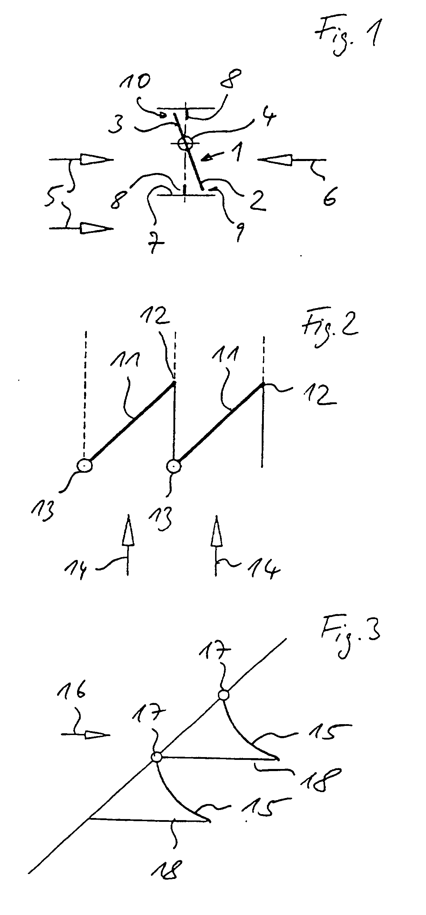

Die **Fig. 1 bis 3** zeigen unterschiedlich ausgebildete Steuerelemente, die in Heizungs- bzw. Klimaanlagen von Kraftfahrzeugen an beliebigen Stellen Verwendung finden können.

**Fig. 1** zeigt ein Steuerelement als Rückschlagklappe 1 mit einem langen Flügel 2 und einem kurzen Flügel 3, die um eine Schwenkachse 4 drehbar gelagert sind. Die Rückschlagklappe 1 ist einstückig ausgebildet. Bei Vorliegen einer Luftströmrichtung entsprechend Pfeilrichtung 5 öffnet die Rückschlagklappe 1 selbsttätig, wohingegen sie bei einer Luftströmrichtung gemäß Pfeilrichtung 6 in eine Schließstellung gebracht wird. Zu diesem Zweck weisen die Innenwände 7 eines gedachten Luftkanals senkrecht abragende Anschlagnasen 8 auf, an die die in axialer Richtung verlaufenden Kanten 9 und 10 des langen Flügels 2 bzw. des kurzen Flügels 3 zur Anlage kommen und die Rückschlagklappe 1 in der Schließstellung halten.

Nach einem zweiten Ausführungsbeispiel der Erfindung gemäß **Fig. 2** kann das Steuerelement als einflügelige Rückschlagklappe 11 ausgebildet sein. Vorzugsweise werden eine Anzahl von Rückschlagklappen 11 nebeneinander angeordnet, wobei die in axialer Richtung verlaufenden Außenkanten 12 der Rückschlagklappen 11 in einer Schließstellung auf der benachbarten Rückschlagklappe 11 oder einer Drehachse 13 der benachbarten Rückschlagklappe 11 anliegen. Die Rückschlagklappe 11 eignet sich besonders gut für die Steuerung eines Luftstroms in vertikaler Richtung, da bei Nichtvorliegen eines Luftstroms von unten nach oben gemäß Pfeilrichtung 14 die Rückschlagklappen 11 aufgrund ihrer Schwerkraft in die Schließstellung gelangen.

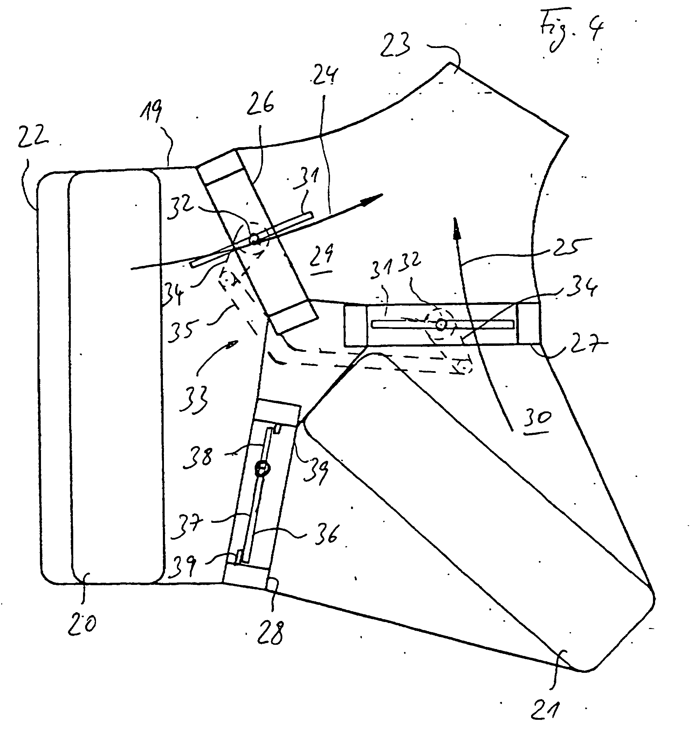

Nach einem weiteren Ausführungsbeispiel der Steuerelemente gemäß **Fig. 3** kann dieses auch als bogenförmige Rückschlagklappe 15 ausgebildet sein. Dies ermöglicht, daß der Luftstrom gemäß Pfeilrichtung 16 schräg auf die Reihe nebeneinander angeordneter Rückschlagklappen 15 auftreffen kann. In der Öffnungsstellung der Rückschlagklappe 15 durchströmt der Luftstrom den Luftkanal unter Verschwenkung der bogenförmigen Rückschlagklappe um eine Schwenkachse 17. Bleibt die Luftströmung aus, schwenkt die Rückschlagklappe 15 unter ihrem eigenen Gewicht gegen einen Anschlag 18, der sich im wesentlichen in waagerechter Richtung von der Schwenkachse 17 erstreckt.

Nach einem weiteren Ausführungsbeispiel der Erfindung gemäß **Fig. 4** werden die Steuerelemente in einer bestimmten Stellung zueinander angeordnet. Fig. 4 zeigt schematisch ein Gehäuse 19 einer Klimaanlage, in dem ein Verdampfer 20 und ein Heizkörper 21 angeordnet sind. Das Gehäuse 19 weist eine Einlaßöffnung 22 und eine Auslaßöffnung 23 für strömende Luft auf, die beispielsweise mit Hilfe eines nicht dargestellten Gebläses in das Gehäuse 19 hinein und entsprechend des Pfeils 24 als Kaltluftstrom oder entsprechend Pfeil 25 als Warmluftstrom durch die Auslaßöffnung 23 in nicht näher dargestellten Weise in den den Innenraum eines Kraftfahrzeugs geleitet wird. Innerhalb des Gehäuses 19 sind drei im wesentlichen baugleich ausgebildete Einbaurahmen 26, 27 und 28 sternförmig zueinander angeordnet. Der Einbaurahmen 26 ist innerhalb eines Kaltluftkanals 29 angeordnet, der sich von dem Verdampfer 20 zu der Auslaßöffnung 23 erstreckt. Der Einbaurahmen 27 ist stromabwärts und der Einbaurahmen 28 stromaufwärts des Heizkörpers 21 innerhalb eines Warmluftkanals 30 angeordnet, der sich im wesentlichen von dem Verdampfer 20 zu der Auslaßöffnung 23 erstreckt.

Jeder Einbaurahmen 26, 27, 28 weist eine Luftklappe 31 auf, die als doppelflügelige Klappe 31 ausgebildet ist und jeweils um eine Schwenkachse 32 von einer Schließstellung in eine Öffnungsstellung und vice versa verschwenkbar gelagert ist. Die Luftklappen 31 der Einbaurahmen 26 und 27 sind über ein Koppelglied 33 miteinander verbunden. Das Koppelglied 33 weist jeweils an den Schwenkachsen 32 der Luftklappen 31 angelenkte Schwenkhebel 34 auf, über die die Luftklappen 31 gemeinsam mit einer Führungsstange 35 verbunden sind. Das Koppelglied 33 ist seitlich am Gehäuse 19 angeordnet und ist über die Führungsstange 35 derart ausgebildet, daß, wenn sich die Luftklappe 31 des Einbaurahmens 27 in der Schließstellung befindet, die Luftklappe 31 des Einbaurahmens 26 sich in der Öffnungsstellung befindet. Bei Verschwenken eines Schwenkhebels 34 mittels eines nicht dargestellten Elektromotors gerät die Luftklappe 31 des Einbaurahmens 27 immer mehr in eine Öffnungsstellung, während die Luftklappe 31 des Einbaurahmens 26 nach und nach in die Schließstellung verschwenkt wird. Durch entsprechende Ansteuerung des Koppelglieds 33 kann die gewünschte Warm- bzw. Kaltluftzufuhr für den Fahrzeuginnenraum eingestellt werden.

Die dritte Luftklappe 31 des Einbaurahmens 28 ist als Rückschlagklappe 36 entsprechend der Ausbildung gemäß Fig. 1 ausgeführt. Sie weist einen langen und einen kurzen Flügel 37 bzw. 38 auf, die verschwenkbar um die Schwenkachse 32 gelagert sind. Ein Anschlag 39 dient dazu, daß beispielsweise bei Einstellung der Klimaanlage mit "maximaler Kälte" die Rückschlagklappe 36 in der Schließstellung gehalten wird und ein Zurückströmen bereits erwärmter Luft aus dem Warmluftkanal 30 in den gegenüberliegenden Kaltluftkanal 29 verhindert wird. Damit ein sicherer Betrieb der Klimaanlage gewährleistet wird, muß diese innerhalb des Fahrzeugs derart gelagert sein, daß der Einbaurahmen 28 im wesentlichen sich in der Senkrechten erstreckt.

Nach einem weiteren Ausführungsbeispiel der Erfindung gemäß **Fig. 5** weist eine Klimaanlage im Unterschied zu der in Fig. 4 dargestellten Klimaanlage eine Anzahl von reihenförmig angeordneten Lamellen 40 innerhalb der Einbaurahmen 26, 27, 28 auf. Die in Fig. 5 gleich ausgebildeten Bauteile werden mit den gleichen Bezugsziffern versehen. Entsprechend dem Ausführungsbeispiel gemäß Fig. 4 sind die Lamellen 40 der Einbaurahmen 26 und 27 ansteuerbar, während die Lamellen 40 des Einbaurahmens 28 selbsttätig verschwenkbar gelagert sind.

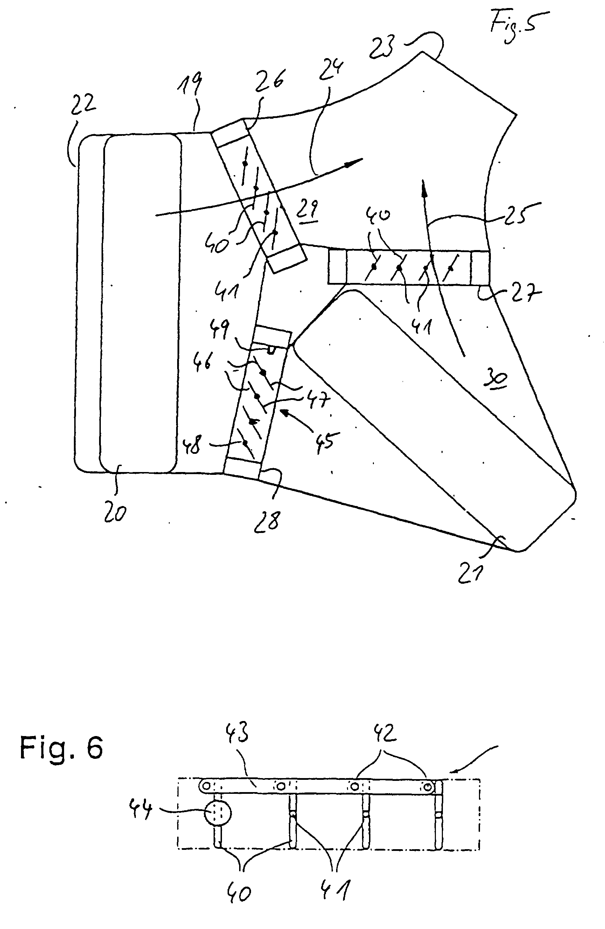

In **Fig. 6** ist die Ansteuerung der Lamellen 40 jeweils des Einbaurahmens 26 und 27 dargestellt. Bei Vorliegen von vier Lamellen 40 je Einbaurahmen 26, 27 weisen drei Lamellen 40 einen Schwenkzapfen 41 an den Enden derselben auf und sind jeweils mit einer ihrer Längskanten über eine fest angebrachte Lasche 42 gemeinsam an einem Verstellhebel 43 angebracht, so daß sie sich durch einen gemeinsamen Antrieb verstellen lassen. Dies wird dadurch erreicht, daß über ein nicht gezeigtes Ritzel eines Antriebsmotors ein fest mit einer der Lamellen 40 verbundenes Ritzel 44 so angetrieben wird, daß die Lamellen 40 jeweils einen Schwenkradius von 120° zurücklegen. Die Lamellen 40 können dadurch gemeinsam aus der in Fig. 6 dargestellten Öffnungsstellung in eine Schließstellung geschwenkt werden.

Die Lamellen 40 des Einbaurahmens 28 sind als Rückschlaglamellen 45 ausgebildet, die jeweils einen oberen kurzen Flügel 46 und einen unteren langen Flügel 47 aufweisen. Die Flügel 46, 47 sind entsprechend dem Ausführungsbeispiel gemäß Fig. 1 um jeweils eine Schwenkachse 48 drehbar gelagert, wobei durch die Anordnung der Klimaanlage mit senkrechter Erstreckung des Einbaurahmens 28 eine definierte Schließstellung des Einbaurahmens 28 gewährleistet ist. Ein Anschlag 48 gewährleistet, daß bei verschlossenem Einbaurahmen 27 keine Warmluft aus dem Warmluftkanal 30 durch den Einbaurahmen 28 in den Kaltluftkanal 29 dringen kann.

## Patentansprüche

1. Heiz- oder Klimaanlage, insbesondere für den Innenraum eines Kraftfahrzeugs, bestehend aus einem Gehäuse mit mindestens einem Wärmeübertrager, mit Ein- und Auslaßöffnungen und mit zwischen diesen verlaufenden Kanälen für mindestens einen den Wärmeübertrager durchströmenden Luftstrom sowie mit den Kanälen zugeordneten Steuerlementen zum Schließen oder Öffnen der Kanäle, mit mindestens zwei Steuerelementen zum Steuern des Luftstroms (25) durch einen der Kanäle
**dadurch gekennzeichnet, dass** von den mindestens zwei Steuerelementen mindestens ein erstes Steuerelement (27, 31, 40) durch ein Betätigungsmittel und mindestens ein zweites Steuerelement (1, 11, 15, 36, 45) durch den Luftstrom und/oder in Einbaulage durch seine Schwerkraft in eine Schließstellung verstellbar ist.

2. Anlage nach Anspruch 1, **dadurch gekennzeichnet, dass** das zweite Steuerelement als Rückschlagelement (1, 11, 15, 36, 45) derart ausgebildet ist, daß das Rückschlagelement (1, 11, 15, 36, 45) bei Vorliegen eines Luftstroms in einer ersten Luftstromrichtung (5) selbsttätig in eine Öffnungsstellung und bei Vorliegen eines Luftstroms in eine entgegengesetzte Luftstromrichtung (6) in eine Schließstellung verstellbar ist, wobei der Luftstrom in die erste Luftstromrichtung vom erste Steuerelement gesteuert wird.

3. Anlage nach Anspruch 1 oder 2, **dadurch gekennzeichnet, dass** das Rückschlagelement (1, 11, 15, 36, 45) um eine Drehachse (4, 13, 17, 32, 48) schwenkbar gelagert ist.

4. Anlage nach Anspruch 3, **dadurch gekennzeichnet, dass** das Rückschlagelement (1, 11, 15, 36, 45) als Rückschlagklappe (1, 36) ausgebildet ist mit einem langen und einem kurzen Flügel (2, 3) und derart angeordnet ist, daß die Rückschlagklappe (1, 36) durch die größere Gewichtskraft des langen Flügels (2) in die Schließstellung verdrehbar ist.

5. Anlage nach Anspruch 3, **dadurch gekennzeichnet, dass** das Rückschlagelement (1, 11, 15, 36, 45) als Rückschlagklappe (11, 15) mit einem einzigen Flügel ausgebildet ist, der um eine Schwenkachse (13, 17) schwenkbar gelagert ist.

6. Anlage nach Anspruch 5, **dadurch gekennzeichnet, dass** das Rückschlagelement (1, 15, 36, 45) als Rückschlagklappe (15) mit im Querschnitt kreisbogenförmigem Flügel ausgebildet ist.

7. Anlage nach einem oder mehreren der Ansprüche 2 bis 6, **dadurch gekennzeichnet, dass** dem Rückschlagelement (1, 15, 36, 45) jeweils ein Anschlag (8, 18, 39, 49) zugeordnet ist zur Anlage desselben in der Schließstellung.

8. Anlage nach Anspruch 7, **dadurch gekennzeichnet, dass** die Rückschlagelemente (11, 45) den Anschlag für ein benachbartes Rückschlagelement (11, 45) bildet.

9. Anlage nach Anspruch 1 oder einem oder mehreren der weiteren Ansprüche, **dadurch gekennzeichnet, dass** die Rückschlagelemente (36, 45) in einem dem Querschnitt der Kanäle angepaßtem Einbaurahmen (28) angeordnet sind und daß die Abmessungen der Rückschlagelemente (36, 45) so gewählt sind, dass sie in einer Schließstellung den Querschnitt des Einbaurahmens (28) abdecken.

10. Anlage nach Anspruch 9, **dadurch gekennzeichnet, dass** innerhalb eines Gehäuses (19) drei Einbaurahmen (26, 27, 28) sternförmig zueinander angeordnet sind, wobei über einen ersten Einbaurahmen (26) der Kaltluftstrom (24) steuerbar ist und über die weiteren zwei jeweils in Strömungsrichtung vor und hinter einem Heizkörper (21) angeordneten Einbaurahmen (27, 28) der Warmluftstrom (30) steuerbar ist, und dass mindestens ein Einbaurahmen (28) ausschließlich Rückschlagelemente (36, 45) aufweist.

11. Anlage nach Anspruch 9 oder 10, **dadurch gekennzeichnet, daß** der Einbaurahmen (28) stromaufwärts des Heizkörpers (28) angeordnet ist und ausschließlich Rückschlaglamellen (45) aufweist, die benachbart zueinander angeordnet sind und deren Schwenkachsen (48) sich etwa auf einer Vertikalen erstrecken.

## Claims

1. Heating or air conditioning system, in particular for the interior of a motor vehicle, comprising a housing with at least one heat transmitter incorporating inlet and outlet orifices with passages disposed between them for at least one air flow circulating through the heat transmitter, as well as control elements co-operating with the passages in order to close or open the passages, at least two control elements controlling the air flow (25) through one of the passages,
**characterised in that**, of the at least two control elements, at least a first control element (27, 31, 40) can be displaced by an actuating means and at least a second control element (1, 11, 15, 36, 45) can be displaced into a closed position by the air flow and/or, in its mounted position, by its gravitational force.

2. System as claimed in claim 1, **characterised in that** the second control element is a non-return element (1, 11, 15, 36, 45), which is designed so that the non-return element (1, 11, 15, 36, 45) automatically switches to an open position whenever there is an air flow in a first air flow direction (5) and can be displaced into a closed position whenever there is an air flow in an opposite air flow direction (6), the air flow in the first air flow direction being controlled by the first control element.

3. System as claimed in claim 1 or 2, **characterised in that** the non-return element (1, 11, 15, 36, 45) is mounted so as to pivot about a rotation axis (4, 13, 17, 32, 48).

4. System as claimed in claim 3, **characterised in that** the non-return element (1, 11, 15, 36, 45) is a non-return valve (1, 36) with a long and a short flap (2, 3) and is disposed so that the non-return valve (1, 36) can be rotated into the closed position by the force of the heavier weight of the long flap (2).

5. System as claimed in claim 3, **characterised in that** the non-return element (1, 11, 15, 36, 45) is a non-return valve (11, 15) with a single flap, which is mounted so as to pivot about a pivot axis (13, 17).

6. System as claimed in claim 5, **characterised in that** the non-return element (1, 15, 36, 45) is a non-return valve (15), the flap of which is arcuate in cross section.

7. System as claimed in one or more of claims 2 to 6, **characterised in that** a respective stop (8, 18, 39, 49) co-operates with each non-return element (1, 15, 36, 45), against which the latter abut in the closed position.

8. System as claimed in claim 7, **characterised in that** the non-return elements (11, 45) constitute the stop for an adjacent non-return element (11, 45).

9. System as claimed in claim 1 or one or more of the other claims, **characterised in that** the non-return elements (36, 45) are disposed in a mounting frame (28) adapted to the cross section of the passages and the dimensions of the non-return elements (36, 45) are selected so that they close off the cross section of the mounting frame (28) in the closed position.

10. System as claimed in claim 9, **characterised in that** three mounting frames (26, 27, 28) are disposed inside a housing (19) in a star-shaped layout and the cold air flow (24) can be controlled by means of a first mounting frame (26) whilst the warm air flow (30) can be controlled by means of the other two mounting frames (27, 28) disposed respectively before and after a heating body (21), at least one mounting frame (28) incorporating non-return elements (36, 45) exclusively.

11. System as claimed in claim 9 or 10, **characterised in that** the mounting frame (28) is disposed upstream of the heating body (28) and has exclusively non-return lamella (45) which are disposed adjacent to one another, and the pivot axes (48) thereof extend in a vertical line.

## Revendications

1. Installation de chauffage ou de climatisation, en particulier pour l'habitacle d'un véhicule automobile, comprenant un boîtier avec au moins un échangeur thermique, avec des orifices d'entrée et de sortie et avec des canaux, situés entre ceux-ci, pour au moins un flux d'air traversant l'échangeur thermique, ainsi qu'avec des éléments de commande associés aux canaux pour fermer ou ouvrir les canaux, avec au moins deux éléments de commande pour commander le flux d'air (25) à travers l'un des canaux, **caractérisée en ce que**, parmi les au moins deux éléments de commande, au moins un premier élément de commande (27, 31, 40) est réglable en position de fermeture par un moyen d'actionnement et au moins un deuxième élément de commande (1, 11, 15, 36, 45) est réglable en position de fermeture par le flux d'air et/ou en position de montage par sa force de gravité.

2. Installation Selon la revendication 1, **caractérisée en ce que** le deuxième élément de commande est conçu sous forme d'élément battant (1, 11, 15, 36, 45) de telle sorte que l'élément battant (1, 11, 15, 36, 45), en présence d'un flux d'air dans une première direction de flux (5) est automatiquement réglable dans une position d'ouverture et en présence d'un flux d'air dans une direction de flux opposée (6) est automatiquement réglable dans une position de fermeture, le flux d'air dans la première direction de flux étant commandé par le premier élément de commande.

3. Installation selon la revendication 1 ou 2, **caractérisée en ce que** l'élément battant (1, 11, 15, 36, 45) est logé de manière pivotante autour d'un axe de rotation (4, 13, 17, 32, 48).

4. Installation selon la revendication 3, **caractérisée en ce que** l'élément battant (1, 11, 15, 36, 45) est conçu sous forme de volet battant (1, 36) avec une ailette longue (2) et une ailette courte (3) et est agencé de telle sorte que le volet battant (1, 36) peut pivoter dans la position de fermeture sous l'effet du poids plus élevé de l'ailette longue (2).

5. Installation selon la revendication 3, **caractérisée en ce que** l'élément battant (1, 11, 15, 36, 45) est conçu sous forme de volet battant (11, 15) avec une seule ailette, qui est logée de manière pivotante autour d'un axe de pivotement (13, 17).

6. Installation selon la revendication 5, **caractérisée en ce que** l'élément battant (1, 15, 36, 45) est conçu sous forme de volet battant (15) avec une ailette avec une section en arc de cercle.

7. Installation selon l'une quelconque des revendications 2 à 6, **caractérisée en ce qu'**à chaque élément battant (1, 15, 36, 45) est associée une butée (8, 18, 39, 49) destinée à former un appui pour celui-ci dans la position de fermeture.

8. Installation selon la revendication 7, **caractérisée en ce que** les éléments battants (11, 45) forment la butée pour un élément battant (11, 45) adjacent.

9. Installation selon la revendication 1 ou une ou plusieurs des autres revendications, **caractérisée en ce que** les éléments battants (36, 45) sont agencés dans un cadre encastré (28), dont la section est adaptée aux canaux, et **en ce que** les dimensions des éléments battants (36, 45) sont choisies de telle sorte que dans une position de fermeture ils couvrent la section du cadre encastré (28).

10. Installation selon la revendication 9, **caractérisée en ce que** trois cadres encastrés (26, 27, 28) sont disposés en étoile à l'intérieur d'un boîtier (19), le flux d'air froid (24) étant commandé par l'intermédiaire d'un premier cadre encastré (26) et le flux d'air chaud (30) étant commandé par les deux autres cadres encastrés (27, 28) agencés respectivement en amont et en aval d'un corps de chauffe (21) dans la direction du flux, et **en ce qu'**au moins un cadre encastré (28) comporte exclusivement des éléments battants (36, 45).

11. Installation selon la revendication 9 ou 10, **caractérisée en ce que** le cadre encastré (28) est agencé en amont du corps de chauffe (21) et comporte exclusivement des éléments battants (45), qui sont disposés côte à côte et dont les axes de pivotement (48) s'étendent pratiquement sur une verticale.
